# EUROPÄISCHE PATENTSCHRIFT

(11) **EP 1 599 353 B1**
(45) Veröffentlichungstag und Bekanntmachung des Hinweises auf die Patenterteilung: **21.06.2006**
(21) Anmeldenummer: 04716527.9
(22) Anmeldetag: 03.03.2004
(51) Int. Cl.: B60J 7/08

(54) **PLATTENKONSTRUKTION AUS KASTENFÖRMIGEN HOHLPROFILEN**
PLATE STRUCTURE CONSISTING OF BOX-TYPE HOLLOW PROFILES
STRUCTURE DE PLAQUE EN PROFILES CREUX CAISSONNES

(30) Priorität: 04.03.2003 CH 336032003
(43) Veröffentlichungstag der Anmeldung: 30.11.2005
(73) Patentinhaber: Baratto, Ranieri, 8587 Oberaach (CH)
(72) Erfinder: Baratto, Ranieri, 8587 Oberaach (CH)
(74) Vertreter: Schneider Feldmann AG Patent- und Markenanwälte
(86) Internationale Anmeldenummer: PCT/CH2004/000126
(87) Internationale Veröffentlichungsnummer: WO 2004/078504

(56) Entgegenhaltungen:
- US-A- 5 040 843
- US-A- 5 154 468
- US-A- 5 330 246
- US-A- 6 129 407
- US-B1- 6 217 103
- US-B1- 6 244 325

## Beschreibung

Zur Erstellung von Plattenkonstruktionen aus kastenförmigen Hohlprofilen müssen die meist aus Aluminium stranggepressten Profile untereinander verbunden werden. Je nach Belastungsart und sonstigen Anforderungen kommen hierbei Schweiss-, Schraub-, Klemm- oder Klebverbindungen in Frage.

Insbesondere im Fahrzeugbau sind kastenförmige Hohlprofile zur Bildung von Plattenkonstruktionen für Fahrzeugaufbauten, wie Fahrzeugladeflächen, Seitenwandflächen oder andere, insbesondere plane Flächen von Fahrzeugaufbauten weit verbreitet. Die kastenförmigen Hohlprofile werden in Profilabschnitte abgelangt und dann entlang den seitlichen Längskanten miteinander verbunden.

Besonders verbreitet ist dabei das Verschweissen der Profile. Dies bedingt allerdings Fachkräfte, die Erfahrung im Schweissen, insbesondere Aluminiumschweissen, haben. Solche Fachkräfte sind nicht leicht zu finden. Zudem müssen die Schweissnähte kontrolliert werden. Der gesamte Zeitaufwand ist relativ hoch und folglich die so gefertigten Plattenkonstruktionen teuer.

Alternativ hat man bereits seit Jahren nach Lösungen gesucht, bei der die kastenförmigen Hohlprofilabschnitte ohne Schweissungen verbindbar sind. Solche Lösungen sind in verschiedensten Ausführungen bekannt. Das Prinzip besteht darin, die kastenförmigen Hohlprofilabschnitte mit ihren seitlichen schmalen Längskanten formschlüssig ineinander greifend zusammenzufügen, wie z.B. in US 6244325B1 offenbart, und zusätzlich mittels Schraub- oder Klemmmittel zu sichern.

Mehrere den Oberbegriff des Anspruchs 1 definierende Schutzrechte sind bekannt. Ein typisches Beispiel einer solchen Lösung zeigt die EP-A-0'626'284. Zwar ist hier nur im Randbereich einer Platte eine solche kombinierte Verbindung aus zusammensteckbarem Formschluss und einer Sicherung mittels Nieten im Überlappungsbereich dargestellt, doch liesse sich diese Verbindungsart auch auf die Erstellung von ganzen planen Plattenkonstruktionen anwenden.

Problematisch ist jedoch die Sicherung mittels Schrauben oder Nieten. Diese stehen im Normalfall gegenüber der gebildeten planen Nutzfläche vor. Bei Ladeflächen würden diese Sicherungen mit der Zeit zerstört. Dies lässt sich nicht vermeiden, wenn es nicht gelingt, die Sicherungselemente in das Profilinnere zu verlegen.

Dieses Problem wurde erkannt, und eine entsprechende Lösung ist aus der JP-A-11-280'175 bekannt. Die Verwendung dieser Konstruktion aus kastenförmigen Hohlprofilen ist dem Anmelder nicht bekannt. Auch wird hier nicht die Erstellung einer Plattenkonstruktion gezeigt, jedoch wird die Möglichkeit der Verbindung von Hohlprofilen zu einer Konstruktion offenbart, wobei die Profilabschnitte entlang ihren Längskanten formschlüssig ineinander greifen. Solche Profile lassen sich einfach zusammenschieben. Im zusammengeschobenen Zustand bilden zwei halbzylindrische Nuten in den aufeinander gleitenden Flächen einen zylindrischen Hohlraum, in dem ein langer Sicherungsstift oder ein Dichtband eingelegt oder eingeführt sein kann. Damit ist das Sicherungs- oder Dichtelement in das Innere zwischen den benachbarten Profilabschnitten verlegt.

Im Fahrzeugbau, wo einerseits Belastungen in mehreren, kaum definierten Richtungen auftreten und die Belastungen sich zudem überlagern, ist die bekannte Lösung aus sicherheitstechnischen Gründen ungenügend. Dies umso mehr als zusätzlich üblicherweise dauernd Vibrationen auftreten. Die aus der JP-11-280'175 bekannten Lösung arbeitet mit einer reinen Formschlusslösung, die für den für die Erfindung vorgesehenen Zweck ungenügend ist.

Es ist die Aufgabe der vorliegenden Erfindung, eine Plattenkonstruktion gemäss Oberbegriff des Patentanspruchs 1 derart zu verbessern, dass eine verspannbare form- und kraftschlusse Verbindung entsteht, die festigkeitsmässig eine Schweisskonstruktion ersetzen kann und auch für Grosskonstruktionen wie im Fahrzeugbau üblich geeignet ist.

Diese Aufgabe löst eine Plattenkonstruktion mit den Merkmalen des Patentanspruchs 1. Die Ausgestaltungsformen gemäss den Ansprüchen 2 bis 4 zeigen bevorzugte Varianten, welche die Krafteinleitung im Verbindungsbereich positiv beeinflussen. Für eine vielseitige Konstruktion können sowohl kastenförmige Hohlprofile gestaltet sein, die eine beidseitige Verbindung zur Fertigung grosser Flächen aufweisen, als auch Hohlprofile mit nur einer einseitigen Verbindung, um einen Abschluss einer Platte zu gestalten.

Die möglichen und bevorzugten Formen der Ausgestaltung der Schraub- oder Klemmverbindung zwischen jeweils zwei benachbarten Hohlprofilabschnitten lassen sich aus den abhängigen Ansprüchen 5 bis 11 entnehmen, während Anspruch 12 aufzeigt, wie die Hülse der Schraub- oder Klemmverbindung mit einer Zusatzfunktion versehen sein kann.

In der nachfolgenden Beschreibung wird eine bevorzugte Ausführungsform des Erfindungsgegenstandes mit Bezug auf die anliegenden Zeichnungen ausführlich erklärt. Es zeigt:
- Figur 1: zu einer Platte oder Plattform verbundene kastenförmige Hohlprofile in perspektivischer Ansicht;
- Figur 2: eine Seitenansicht eines Profilabschnittes eines Profils mit unterschiedlicher Oberflächengestaltung;
- Figur 3: eine Seitenansicht eines ebensolchen Profilabschnittes mit spiegelsymmetrischer Seitenkantengestaltung;
- Figur 4 a-c: zeigt das schrittweise Zusammenfügen zweier benachbarter Hohlprofilabschnitte;
- Figur 5: zeigt eine Schraub- oder Klemmverbindung aus einer Hülse mit eingesetztem Expander im Schnitt in der nicht expandierte und
- Figur 6: in der expandierten Position;
- Figur 7: stellt die Einführung der Schraub- oder Klemmverbindung in den zylindrischen Hohlraum dar.

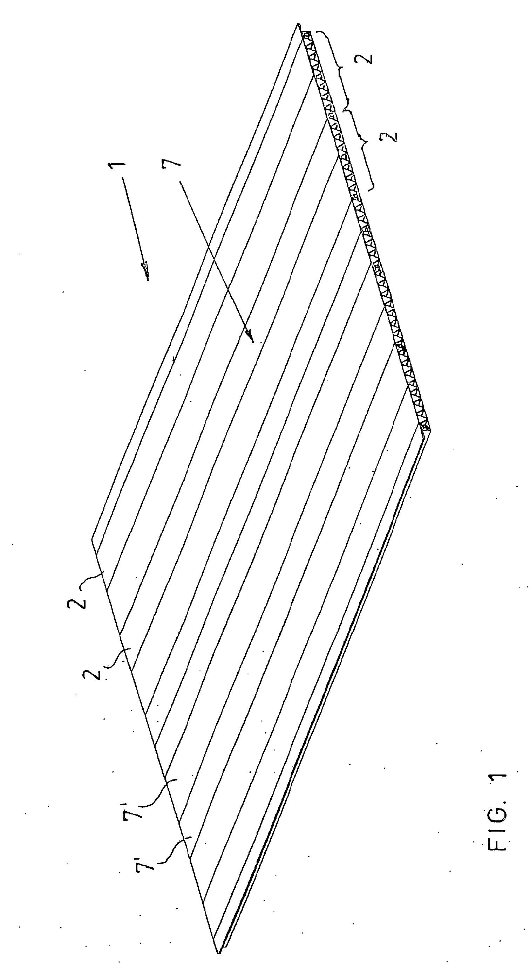

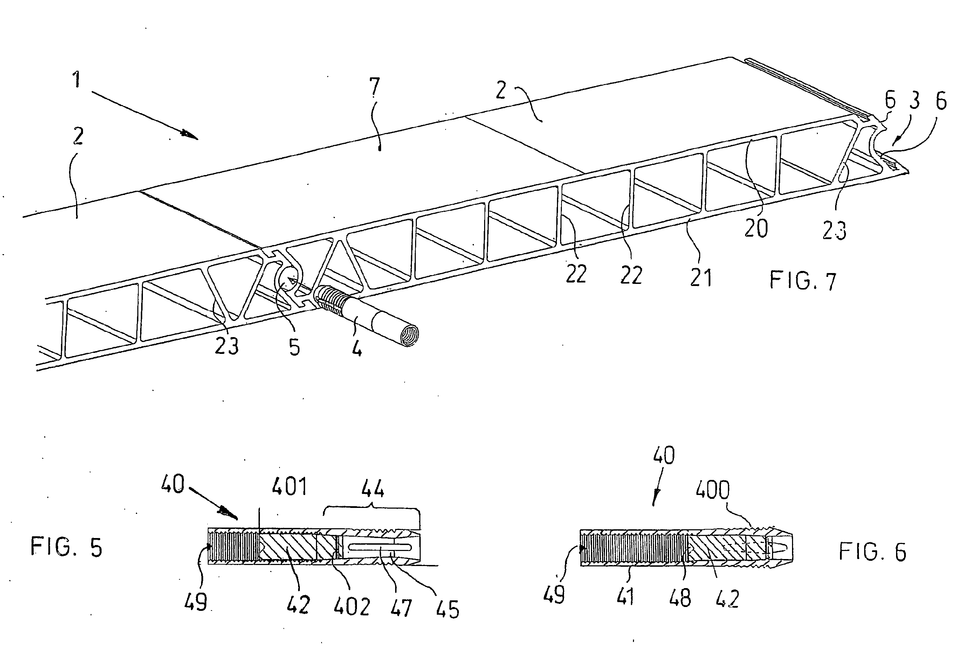

Bezüglich des Gesamtaufbaus der Platte 1 oder Plattenkonstruktion aus kastenförmigen Hohlprofilschnitten 2 wird vorerst auf die Figuren 1 und 7 verwiesen. Eine solche Platte oder Plattenkonstruktion 1 wird insbesondere im Fahrzeugbau zur Erstellung von Fahrzeugladeflächen, Seitenwandflächen oder anderen, insbesondre planen Flächen von Fahrzeugaufbauten verwendet. Zur Bildung der erfindungsgemässen Plattenkonstruktion sind mindestens zwei kastenförmige Hohlprofilabschnitte, die entlang ihrer gemeinsamen schmalen Längskante miteinander verbunden sind, erforderlich. Die kastenförmigen Hohlprofilabschnitte 2 sind vorzugsweise aus Aluminium stranggepresste Profile, die in entsprechenden, für die Konstruktion erforderlichen Längen zu Abschnitten getrennt sind. Jeder kastenförmige Hohlprofilabschnitt 2 weist zwei planparallele Deckflächen 20 und 21 auf. Während die eine planparallele Deckfläche 20 beispielsweise glatt sein kann, kann die andere planparallele Deckfläche 21 strukturiert, wie in Figur 7 dargestellt, beispielsweise mit feinen Längsrillen versehen sein. Zwischen den beiden planparallelen Deckflächen 20 und 21 sind mehrere das Hohlprofil unterteilende, längs verlaufende Stützstege 22 vorhanden. Diese Stützstege 22 laufen vertikal zu den planparallelen Deckflächen 20 und 21. Lediglich im Randbereich sind ein oder mehrere entsprechend der erforderlichen Versteifung verlaufende, geneigte Stützstege 23 vorhanden. Seitlich werden die Hohlprofilabschnitte 2 durch besonders gestaltete schmale Längskanten 3 begrenzt.

Insbesondere weisen diese schmalen Längskanten 3 zu den planparallelen Deckflächen 20 geneigt verlaufende Flanken 6 auf. Die Gesamtheit der parallelen und insbesondere planparallelen Deckflächen 20 beziehungsweise 21 bildet die Oberfläche 7 der Platte 1.

Obwohl in der Zeichnung lediglich Varianten von Hohlprofilabschnitten mit planparallelen Deckflächen gezeigt sind, ist es selbstverständlich, dass die Deckflächen quer zur Längsrichtung eine Wölbung aufweisen können, so dass sich insgesamt auch gekrümmte bis zu zylindrische Flächen bilden lassen. Entsprechend entsteht gegebenenfalls eine gewölbte oder gekrümmte Plattenkonstruktion.

Die schmalen Längskanten 3 der Hohlprofilabschnitte 2 haben eine derartige Gestalt, dass sie im zusammengefügten Zustand zweier aneinander stossenden schmalen Längskanten 3 einen zylindrischen Hohlraum 5 definieren. Die Trennung zwischen zwei benachbarten Hohlprofilabschnitten 2 verläuft folglich immer durch den erwähnten zylindrischen Hohlraum 5. Die schmale Längskante 3 ist so gestaltet, dass zwei benachbarte Hohlprofilabschnitte 2 in formschlüssiger, sich verkrallender oder hintergreifender Verbindung zueinander stehen. Eine zusätzliche kraftschlüssige Verbindung erfolgt mittels eines Schraub- oder Klemmmittels 4. Auf die genaue Ausgestaltung sowohl der schmalen Längskanten 3 als auch der Schraub- oder Klemmmittel 4 wird später noch eingegangen.

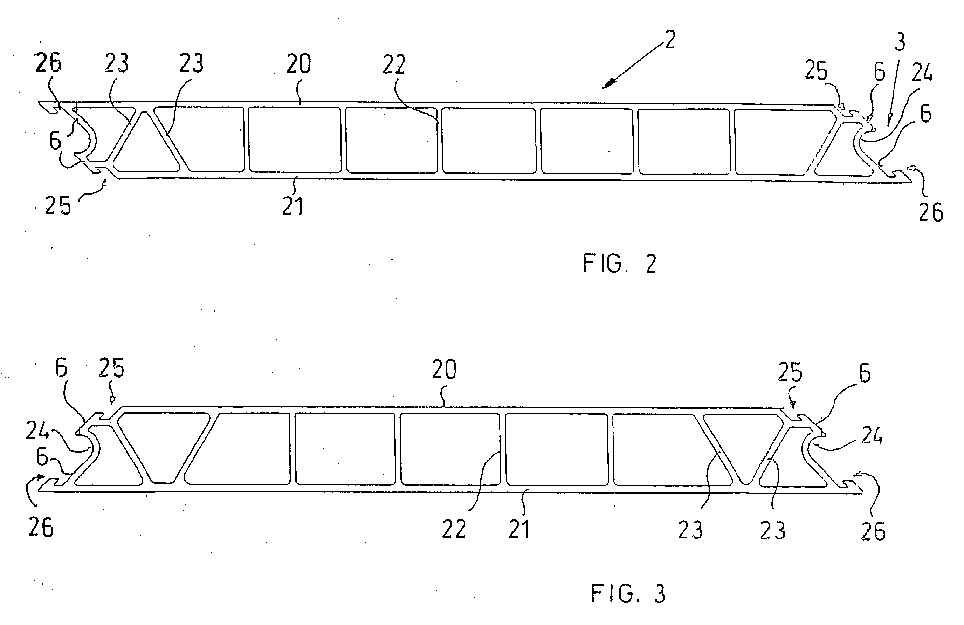

In den Figuren 2 und 3 sind zwei verschiedene Beispiele von Hohlprofilabschnitten in Ansicht quer zu ihrer Längsausdehnung dargestellt. Jeder Hohlprofilabschnitt ist wiederum gesamthaft mit 2 bezeichnet. Zwischen der oberen planparallelen Deckfläche 20 und der unteren planparallelen Deckfläche 21 verlaufen die bereits erwähnten Stützstege 22 sowie die geneigten Stützstege 23 im seitlichen Bereich nahe den schmalen Längskanten 3. Die Gesamtbreite der Hohlprofilabschnitte kann je nach Einsatzbereich variieren. Übliche Breiten dürften zwischen 100 und 500 mm liegen. Auch die Dicke der Hohlprofilabschnitte 2 kann selbstverständlich variieren. Sinnvolle Grössen dürften etwa zwischen 10 und 100 mm liegen.

Die schmalen, seitlichen Längskanten 3 weisen wie bereits erwähnt sogenannte Flanken 6 auf. Diese Flanken 6 verlaufen geneigt zu den planparallelen Deckflächen 20, 21. Jede Flanke 6 der beiden Flanken einer Längskante 3 begrenzt eine gemeinsame halbzylindrische Fläche 24. Die nach aussen gerichteten Enden der beiden geneigten Flanken 6 münden in zwei gegengleiche, im Querschnitt hakenförmige Profilbereiche 25 und 26. Während der eine hakenförmige Profilbereich 25 eine Negativform hat, hat der andere hakenförmige Bereich 26 eine Positivform.

Bei dicken Profilabschnitten 2 können in jeder Längskante auch zwei hohlzylindrische Flächen geformt werden. Dabei können sich die hakenförmigen Profilbereiche 25 und 26 wiederholen oder wie bei den bisher beschriebenen Varianten nur an den Bereichen der Deckflächen angeordnet sein.

Die beiden Flankenabschnitte 6 verlaufen parallel zueinander und sind zudem im hier dargestellten Beispiel um den Durchmesser der halbzylindrischen Fläche 24 zueinander versetzt verlaufend. Dies stellt zwar eine besonders bevorzugte Ausführungsform dar, jedoch ist dies keineswegs zwingend. Sind die beiden Flankenabschnitte 6 weniger als der Durchmesser des zylindrischen Hohlraumes 5 zueinander versetzt, so bedeutet dies lediglich, dass auf einer Seite eine schmale Längskante 3 mehr als eine halbzylindrische Fläche aufweist, während die benachbarte schmale Längskante 3 entsprechend weniger als eine halbzylindrische Fläche aufweisen muss. Auch bezüglich der Gestaltung der hakenförmigen Profilbereiche 25 und 26 besteht ein gewisser Gestaltungsfreiraum.

Bei der Ausführungsform gemäss der Figur 2 verlaufen die Flanken 6 an beiden schmalen Längskanten 3 parallel zueinander. Das Profil ist entsprechend im Querschnitt bei der Gestaltung der beiden Längskanten 3 punktsymmetrisch geformt. Die Verbindung zweier solcher Hohlprofilabschnitte 2 erfolgt mittels jeweils zweier Hohlprofilabschnitte, die lagegleich nebeneinander montiert werden. Dies im Gegensatz zu der Ausführungsvariante gemäss der Figur 3. Die geneigten Flanken 6 der einen Längskante 3 und die geneigten Flanken 6 der gegenüberliegenden Längskante 3 desselben Profilabschnittes 2 schliessen einen spitzen Winkel ein. Bei den Ausführungen gemäss der Figuren 2 und 3 beträgt die Neigung der Flanken 6 zu den planparallelen Deckflächen 20, 21 45 Grad. Entsprechend lassen sich Profilabschnitte wie in den Figuren 2 und 3 gezeigt auch untereinander verbinden. Ebenso lassen sich aber auch Profilabschnitte der Figur 3 miteinander verbinden. Dabei müssen diese lediglich wechselweise verlegt werden, so dass einmal die planparallele Deckfläche 20, das andere Mal die planparallele Deckfläche 21 oben zu liegen kommt. Da die einzelnen bereits beschriebenen Merkmale der Profilabschnitte 2 ansonsten übereinstimmend sind, weisen diese auch dieselben Bezugszeichen auf.

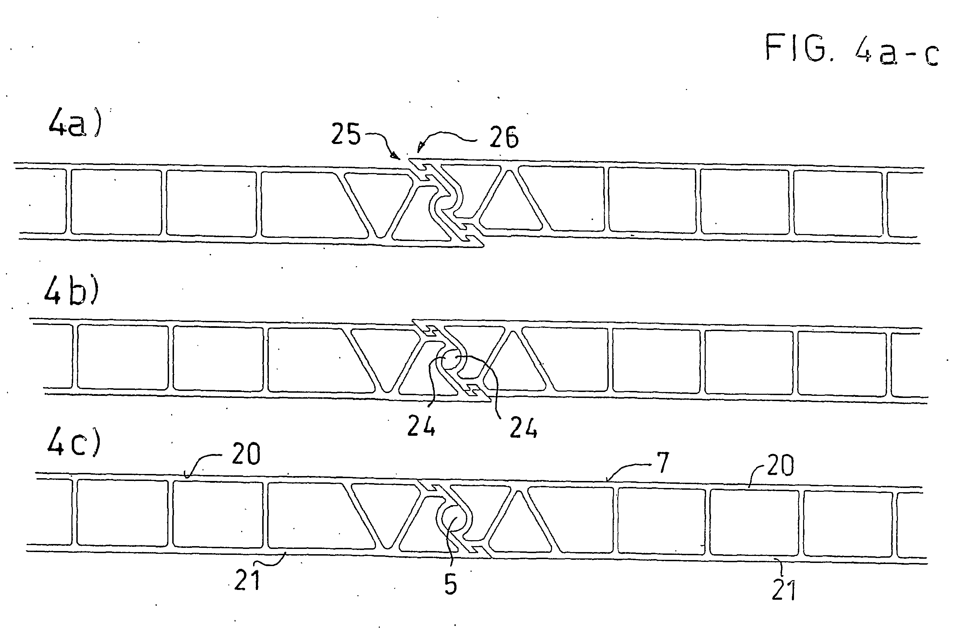

Aus den Figuren 4a bis c erkennt man die relativ einfache Möglichkeit des Zusammenfügens der Profilabschnitte. In der ersten, in der Figur 4a dargestellten Position werden die beiden benachbarten Profilabschnitte parallel zueinander aufeinander zu bewegt, bis etwa die geneigten Flanken an den Längskante 3 miteinander in Berührung kommen, wie dies schliesslich in der Figur 4b dargestellt ist, worauf dann die beiden Profilabschnitte parallel zu den Flanken so zueinander bewegt werden, dass die beiden benachbarten planparallelen Deckflächen 20 beziehungsweise 21 in einer fluchtenden Oberfläche 7 zu liegen kommen. Nun ist auch der zylindrische Hohlraum 5 gebildet. In dieser Situation sind die jeweils benachbarten Hohlprofilabschnitte 2 in formschlüssiger, jedoch noch nicht kraftschlüssiger Verbindung zueinander. Zur Erzeugung der kraftschlüssigen Verbindung benötigt es noch die Schraub- oder Klemmmittel 4, die hier noch nicht dargestellt sind. Diesbezüglich wird auf die nachfolgenden Figuren 5 und 6 verwiesen.

In der Figur 5 ist das erwähnte Schraub- oder Klemmmittel 4 in der nicht verspannten und in Figur 6 in der verspannten Situation dargestellt. Das Schraub- oder Klemmmittel 4 ist in der bevorzugten Ausführungsform als Spann- oder Befestigungsbolzen 40 gestaltet. Der Spann- oder Befestigungsbolzen 40 besteht aus zwei Teilen, nämlich einer Spreizhülse 41 und einem darin einsetzbaren Expander 42. Die Spreizhülse 41 ist im nicht verspannten Zustand im Aussendurchmesser über ihre gesamte Länge gleichbleibend. Im Querschnitt, wie in Figur 5 gezeigt, erkennt man deutlich, dass die Spreizhülse 41 im nicht expandierenden Teil mit einem Innengewinde 43 versehen ist. Anschliessend an das Innengewinde 43 liegt das in Einschieberichtung vordere, expandierende Teil 44 der Spreizhülse 41. Der expandierende Teil 44 der Spreizhülse ist mit einem oder mehreren Längsschlitzen 47 versehen. Diese Schlitze erleichtern das Expandieren des Teiles 44 der Spreizhülse 41. Die erwähnten Längsschlitze 47 können, wie hier dargestellt, geschlossen, d.h. nicht bis zum vorderen Rand hinauslaufend gestaltet sein, oder eben bis zum vorderen Ende hin sich erstrecken und entsprechend offene Längsschlitze 47 bilden. Der Expander 42 besteht im wesentlichen aus einem zylindrischen Stift mit einem Aussengewinde, welches auf das Innengewinde 43 der Spreizhülse 41 angepasst ist. Am vorderen Ende weist der Expander 42 einen sich konisch zu seinem Ende hin verjüngenden Expanderkopf 401 auf. Der Expanderkopf 401 kann zusätzlich mit einer Materialaufnahmerille 42 versehen sein.

Die Spreizhülse 41 weist in ihrem expandierenden Teil 44 eine sich konisch verjüngende Bohrung 45 auf. Entsprechend ist die Wandstärke in diesem Bereich variierend. Beim Vortreiben des Expanders 42 gleitet der Expanderkopf 401 in die sich konisch verjüngende Bohrung 45 hinein und weitet diese auf. Zum Antrieb des Expanders 42 ist der Expander an seinem hinteren Ende mit einem Formschlussantriebsmittel 48 ausgestaltet. Im vorliegenden Fall ist dieses der Einfachheit halber als Schlitz gezeichnet. Selbstverständlich kommen jedoch alle übrigen Formen für solche Antriebsmittel in Frage, wie beispielsweise Innennimbus oder Torque. Der Expander 42 kann zusätzlich mit einer Materialaufnahmerille 402 versehen sein. Diese Rille ist nahe dem Ende des Kopfes angebracht. Beim Expandieren der Spreizhülse 41 wird bis zum Anliegen des expandierenden Teiles 44 der Spreizhülse im zylindrischen Hohlraum 5 lediglich eine Materialverformung stattfinden, beim weiteren Vortreiben des Expanders wird jedoch auch im Bereich der Aufnahmerille 402 Material verdrängt und in die Aufnahmerille gelangen. Treibt man den Expander mit einem Schraubmittel mit vorgegebenem Drehmoment an, so erreicht man immer den gewünschten Bereich, in dem sich an der Spreizhülse eine entsprechende Braue gebildet hat, die in die Materialaufnahmerille 402 gelangt. Hierdurch kommt auch zwischen dem Expander 42 und der Spreizhülse 41 nicht nur ein Kraftschluss, sondern auch ein Formschluss zustande. Dies erhöht die Sicherheit insbesondere bei Anwendungen wie dem Fahrzeugbau, wo ständig mit Vibrationen zu rechnen ist. Es ist jedoch selbstverständlich auch denkbar, dass man in der Spreizhülse 41 eine Art Endanschlag in der Form einer Expandersicherungswulst 46 vorsieht.

Die Spreizhülse 41 kann ebenfalls mit Mitteln zur Halterung gegen Verdrehen versehen sein. Eine entsprechende Kerbe 49 soll ein solches Mittel andeuten. Dies ist sicherlich sinnvoll, wenn mit relativ grossen Toleranzen gearbeitet werden soll. In diesem Fall kann verhindert werden, dass beim Antrieb des Expanders 42 gleichzeitig auch die Spreizhülse 41 sich mitdreht. Zusätzlich kann es jedoch auch wünschenswert sein, dass man über das Mittel 49 auch die Spreizhülse in eine Drehbewegung versetzen kann. Die Spreizhülse 41 wird man sinnvollerweise im Bereich des expandierenden Teils 44 auf der Aussenfläche mit einem die Haftung vergrössernden Profil 400 versehen. Dieses Profil 400 kann gleichzeitig auch als selbstschneidendes Gewinde gestaltet sein. Dies ist dann sinnvoll, wenn man einerseits die Möglichkeit einer Demontage sicherstellen will, oder andererseits wenn man eine exakte Positionierung der Spreizhülse 41 benötigt. Gerade diese Situation kann sich ergeben, wenn man die Spreizhülse 41 im Endbereich zweier benachbarter Profilabschnitte 2 verwenden will, um hieran ein weiteres, einschraubbares Konstruktionselement anzubringen. Gerade im Fahrzeugbau ist dies häufig der Fall. Falls es erforderlich ist, kann folglich nach dem Einsetzen des Spann- oder Befestigungsbolzens 40, nachdem der Expander 42 vorgeschoben ist, die Spreizhülse 41 dank dem Mittel 49 geringfügig vor oder zurück geschraubt werden, bis die Spreizhülse 41 mit der Aussenkante der Profilabschnitte 2 bündig ist.

Während der Expander bisher als einschraubbares Element beschrieben worden ist, ist es für den Fachmann selbstverständlich, dass der Expander auch rein axial verschiebbar gestaltet sein kann. Ein solcher Expander lässt sich beispielsweise mit einem Schlaginstrument oder mit einem hydraulischen Presselement verschieben.

Bei den letzt genannten Lösungen wird auch klar, dass die bereits ausgiebig beschriebenen zylindrischen Hohlräume 5 keineswegs einen kreisförmigen Querschnitt haben müssen. Zylindrisch ist hier im geometrischen Sinn zu verstehen, wobei ein über die gesamte Längserstreckung gleichbleibender Querschnitt zu verstehen ist.

Insbesondere für den Randbereich der zu erstellenden Platte oder Plattenkonstruktion 1 können entsprechende Hohlprofilabschnitte verwendet werden, die lediglich einseitig mit einer schmalen Längskante 3 versehen sind, die zur erfindungsgemässen Verbindung ausgestaltet ist. Dies ist in der Figur 1 dargestellt.

### Liste der Bezugszahlen

- 1: Platte oder Plattenkonstruktion
- 2: Hohlprofilabschnitte
- 3: schmale Längskante
- 4: Schraub- oder Klemmmittel
- 5: zylindrischer Hohlraum
- 6: Flanken der Längskante
- 7: Oberfläche der Platte
- 20: planparallele Deckflächen
- 21: planparallele Deckflächen
- 22: Stützstege
- 23: geneigte Stützstege
- 24: halbzylindrische Fläche
- 25: hakenförmiger Profilbereich, negativ
- 26: hakenförmiger Profilbereich, positiv
- 40: Spann- oder Befestigungsbolzen
- 41: Spreizhülse
- 42: Expander
- 43: Innengewinde
- 44: expandierender Teil
- 45: konisch sich verjüngende Bohrung
- 46: Expandersicherungswulst
- 47: Längsschlitz
- 48: Formschlussantriebsmittel
- 49: Mittel zur Halterung gegen Verdrehen
- 400: Haftung vergrösserndes Profil
- 401: Expanderkopf
- 402: Materialaufnahmerille

## Patentansprüche

1. Plattenkonstruktion aus kastenförmigen Hohlprofilabschnitten (2), bei der jeweils zwei benachbarte kastenförmige Hohlprofilabschnitte (2) mit ihren seitlichen schmalen Längskanten (3) formschlüssig ineinandergreifend gehalten sind, wobei die aneinander stossenden Längskanten (3) der Hohlprofilabschnitte (2) mindestens einen zylindrischen Hohlraum (5) definieren, wobei ferner aufeinander zu liegen kommende Flanken (6) an den schmalen Längskanten (3) zur Oberfläche (7) der zu bildenden Platten geneigt und beidseits des zylindrischen Hohlraumes (5) um maximal den Durchmesser des mindestens einen Hohlraumes versetzt angeordnet sind und in einhakender formschlüssiger Verbindung stehen, **dadurch gekennzeichnet, dass** Schraub- oder Klemmmittel (4) vorhanden sind, in Form von in den zylindrischen Hohlraum (5) einschiebbaren Spann- und Befestigungsbolzen (40) mit darin axial vortreibbarem oder einschraubbarem Expander (42), so dass eine allseitig belastbare Verbindung zwischen den aneinander stossenden, eine Platte (1) bildenden kastenförmigen Hohlprofilabschnitten entsteht (2).

2. Plattenkonstruktion nach Anspruch 1, **dadurch gekennzeichnet, dass** die der Verbindung dienenden schmalen seitlichen Längskanten (3) aus jeweils zwei parallelen aufeinander zu liegen kommenden Flanken (6) besteht, die über eine verbindende, mindestens annähernd halbzylindrische Fläche (24) miteinander verbunden sind.

3. Plattenkonstruktion nach Anspruch 2, **dadurch gekennzeichnet, dass** die parallelen Flanken (6) um genau den Durchmesser des zylindrischen Hohlraumes (5) versetzt zueinander verlaufen.

4. Plattenkonstruktion nach Anspruch 1, **dadurch gekennzeichnet, dass** in einer planparallelen Deckfläche (20, 21) des Hohlprofilabschnittes (2) ein geneigter, parallel zur angrenzenden Flanke (6) verlaufender hakenförmiger Profilbereich (25) negativ eingeformt ist, während an der gegenüberliegenden Deckfläche nach innen gerichtet ein gegengleicher positiver hakenförmiger Profilbereich (26) angeformt ist.

5. Plattenkonstruktion nach Anspruch 1, **dadurch gekennzeichnet, dass** der Spann- oder Befestigungsbolzen (40) die Form einer Spreizhülse (41) hat, die mindestens einseitig ein Innengewinde (43) aufweist und ein expandierendes Teil (44) der Spreizhülse eine sich konisch verjüngende Bohrung (45) hat.

6. Plattenkonstruktion nach Anspruch 5, **dadurch gekennzeichnet, dass** das expandierende Teil (44) der Spreizhülse (41) innen mit einem Expandersicherungswulst (46) versehen ist.

7. Plattenkonstruktion nach Anspruch 1, **dadurch gekennzeichnet, dass** das expandierende Teil (44) der Spreizhülse (41) mit mindestens einem offenen oder geschlossenen Längsschlitz (47) versehen ist.

8. Plattenkonstruktion nach Anspruch 1, **dadurch gekennzeichnet, dass** der Expander (42) mit einem Formschlussantriebsmittel (48) versehen ist.

9. Plattenkonstruktion nach Anspruch 1, **dadurch gekennzeichnet, dass** der Spann- und Befestigungsbolzen (40) Mittel (49) zur Halterung gegen ein Verdrehen relativ zum Expander aufweist.

10. Plattenkonstruktion nach Anspruch 5, **dadurch gekennzeichnet, dass** das expandierende Teil (44) der Spreizhülse (41) aussen mit einem die Haftung vergrössernden Profil (400) versehen ist.

11. Plattenkonstruktion nach Anspruch 5, **dadurch gekennzeichnet, dass** das expandierende Teil (44) der Spreizhülse (41) aussen mit einem selbstschneidenden Gewinde versehen ist.

12. Plattenkonstruktion nach Anspruch 5, **dadurch gekennzeichnet, dass** die Spreizhülse (41) mindestens annähernd bündig zum Ende der verbindenden Hohlprofilabschnitte (2) angeordnet ist und der Aufnahme eines einschraubbaren Konstruktionselementes dient.

## Claims

1. A plate construction of box-like hollow-profile sections (2), with which in each case two adjacent box-like hollow profile sections (2) with their lateral, narrow longitudinal edges (3) are held engaging into one another with a positive fit, wherein the longitudinal edges (3) of the hollow-profile sections (2) which abut one another, define at least one cylindrical cavity (5), wherein furthermore flanks (6) which come to lie on one another at the narrow longitudinal edges (3) are inclined to the surface (7) of the plates to be formed, and on both sides of the cylindrical cavity (5) are arranged offset by maximally the diameter of the at least one cavity, and are connected in a hooking manner with a positive fit, **characterised in that** screw- or clamping means (4) are present in the form of clamping- or fastening bolts (40) which may be inserted into the cylindrical cavity (5), with expanders (42) which may be axially driven or screwed therein, so that a connection loadable on all sides arises between the box-like hollow profile sections forming a plate (1) and abutting one another.

2. A plate construction according to claim 1, **characterised in that** the narrow, lateral longitudinal edges (3) serving for the connection consist in each case of two parallel flanks (6) which come to lie on one another and which are connected to one another via a connecting, at least approximately half cylindrical surface (24).

3. A plate construction according to claim 2, **characterised in that** the parallel flanks (6) run offset to one another by exactly the diameter of the cylindrical cavity (5).

4. A plate construction according to claim 1, **characterised in that** an inclined, hook-like profile region (25) running parallel to the bordering flank (6) is negatively formed in a plane-parallel cover surface (20, 21) of the hollow profile section (2), whilst an equal and opposite, positive hook-like profile region (26) is integrally formed on the oppositely lying cover surface in an inwardly directed manner.

5. A plate construction according to claim 1, **characterised in that** the clamping- or fastening bolt (40) has the form of an expanding sleeve (41) which at least on one side comprise an inner thread (43), and an expanding part (44) of the expanding sleeve has a conically tapering bore (45).

6. A plate construction according to claim 5, **characterised in that** the expanding part (44) of the expanding sleeve (41) is provided at the inside with an expander securing bead (46).

7. A plate construction according to claim 1, **characterised in that** the expanding part (44) of the expanding sleeve (41) is provided with at least one open or closed longitudinal slot (47).

8. A plate construction according to claim 1, **characterised in that** the expander (42) is provided with a positive fit drive means (48).

9. A plate construction according to claim 1, **characterised in that** the clamping- and fastening bolt (40) comprises means (49) for holding against a rotation relative to the expander.

10. A plate construction according to claim 5, **characterised in that** the expanding part (44) of the expanding sleeve (41) is provided at the outside with a profile (400) which increases the grip.

11. A plate construction according to claim 5, **characterised in that** the expanding part (44) of the expanding sleeve (44) is provided on the outside with a self-cutting thread.

12. A plate construction according to claim 5, **characterised in that** the expanding sleeve (41) is arranged at least approximately flush to the edge of the connecting hollow profile sections (2) and serves for accommodating a construction element capable of being screwed in.

## Revendications

1. Construction de plaques à partir de sections à profil creux en forme de boîte (2), dans laquelle à chaque fois deux sections à profil creux en forme de boîte adjacentes (2) avec leurs bords longitudinaux étroits (3) sont tenues imbriquées l'une dans l'autre à engagement positif, les bords longitudinaux (3) des sections à profil creux (2) qui butent les uns contre les autres définissant au moins une cavité cylindrique (5), en outre les flancs (6) qui viennent s'allonger les uns sur les autres à leurs bords longitudinaux étroits (3) étant inclinés vers la surface (7) des plaques à former, étant arrangés décalés des deux côtés de la cavité cylindrique (5) au maximum du diamètre de ladite au moins une cavité et étant liés accrochés à engagement positif,
**caractérisée en ce que**
des moyens de serrage ou de vissage (4) sont présents sous la forme de boulons de serrage ou de fixation (40) insérables dans la cavité cylindrique (5) avec un expanseur (42) pouvant être axialement vissé ou déplacé, de sorte qu'une liaison chargeable de tous côtés résulte entre les sections à profil creux en forme de boîte (2) formant une plaque (1) et butant les unes contre les autres.

2. Construction de plaques selon la revendication 1, **caractérisée en ce que** les bords longitudinaux étroits (3) servant pour la liaison sont constitués à chaque fois de deux flancs parallèles (6) qui viennent s'allonger l'un sur l'autre et qui sont liés l'un à l'autre par une surface de liaison (24) au moins approximativement semi-cylindrique.

3. Construction de plaques selon la revendication 2, **caractérisée en ce que** les flancs parallèles (6) s'étendent décalés l'un par rapport à l'autre d'exactement le diamètre de la cavité cylindrique (5).

4. Construction de plaques selon la revendication 1, **caractérisée en ce qu'**une région de profil (25) en forme de crochet inclinée et s'étendant parallèlement au flanc adjacent (6) est formée négativement dans une surface de couverture plane et parallèle (20, 21) de la section à profil creux (2), tandis qu'une région de profil (26) en forme de crochet, égale, opposée et à relief positif est formée dirigée vers l'intérieur sur la surface de couverture opposée.

5. Construction de plaques selon la revendication 1, **caractérisée en ce que** le boulon de serrage ou de fixation (40) a la forme d'un manchon d'expansion (41) qui comprend au moins d'un côté un filetage intérieur (43) et une partie d'expansion (44) du manchon d'expansion a un alésage (45) s'effilant coniquement.

6. Construction de plaques selon la revendication 5, **caractérisée en ce que** la partie d'expansion (44) du manchon d'expansion (41) est munie à l'intérieur d'un bossage de sécurité de l'expanseur (46).

7. Construction de plaques selon la revendication 1, **caractérisée en ce que** la partie d'expansion (44) du manchon d'expansion (41) est munie d'au moins une fente longitudinale (47) ouverte ou fermée.

8. Construction de plaques selon la revendication 1, **caractérisée en ce que** l'expanseur (42) est muni d'un moyen d'entraînement à engagement positif (48).

9. Construction de plaques selon la revendication 1, **caractérisée en ce que** boulons de serrage ou de fixation (40) comprend des moyens (49) de maintien contre une rotation relativement à l'expandeur.

10. Construction de plaques selon la revendication 5, **caractérisée en ce que** la partie d'expansion (44) du manchon d'expansion (41) est munie à l'extérieur d'un profil (400) qui augmente l'adhérence.

11. Construction de plaques selon la revendication 5, **caractérisée en ce que** la partie d'expansion (44) du manchon d'expansion (41) est munie à l'extérieur d'un filetage taraudeur.

12. Construction de plaques selon la revendication 5, **caractérisée en ce que** le manchon d'expansion (41) est agencé au moins approximativement encastré à l'extrémité des sections à profil creux (2) et sert à la réception d'un élément de construction propre à être vissé dans le manchon d'expansion.
